# EUROPEAN PATENT APPLICATION

(11) **EP 4 814 825 A1**
(43) Date of publication of application: **30.09.2026**
(21) Application number: 26161512.4
(22) Date of filing: 02.03.2026
(51) Int. Cl.: G06Q 10/063, G06Q 10/0635

(54) **METHOD AND SYSTEM FOR SELECTION OF AN OPTIMAL MACHINE LEARNING MODEL FOR REGIONAL RISK ASSESSMENT**

(30) Priority: 24.03.2025 IN 202521027366
(71) Applicant: Tata Consultancy Services Limited, Mumbai, Maharashtra 400 021 (IN)
(72) Inventor: ASWAL, Shreyansh, 411057 Pune (IN); DESHPANDE, Shailesh Shankar, 411028 Pune (IN); PAL, Arpan, 700091 Kolkata (IN)
(74) Representative: Goddar, Heinz J.

(57) **Abstract**

This disclosure relates generally to a method of selecting a machine learning (ML) model for regional risk assessment of susceptible region. State-of-the-art methods provide various ML models for risk assessment that provides hazard susceptibility maps. However, the selection of an optimal ML model for the susceptible region remains a challenge. The method utilizes an analysis of a plurality of factors (qualitative and quantitative) that are influenced due to change in ecological environment of the suspectable region prior to an onset of the hazard. The method further involves generating an individual scores based on assessment of the plurality of factors, availability of labelled samples, and resolution level of images of the suspectable region. Each individual score is combined to obtain a selection score. The selection score is scanned to a pre-classified ML models to select an optimal ML model suitable for assessment of the expected hazard based on the selection score.

## Description

### CROSS-REFERENCE TO RELATED APPLICATIONS AND PRIORITY

The present application claims priority from Indian patent application no. 202521027366, filed on Mar 24, 2025.

### TECHNICAL FIELD

The disclosure herein generally relates to selection of an optimal machine learning model, and, more particularly, to the selection of an optimal machine learning model for regional risk assessment associated with natural hazards.

### BACKGROUND

Natural hazards such landslides, floods, droughts, etc. significantly impact our lives. They are directly responsible for the death of around 40-50 thousand people every year. In addition to this, they cause significant infrastructure damage which results in severe economic loss as well as loss of livelihood for many individuals. Poorer nations and developing countries have to bear the brunt of this impact. The triggering factor is usually natural (like excessive rainfall for a flood), however human activities such as mining and construction work can also influence the onset and extent of natural hazards.

Susceptibility mapping involves identification of areas in a given region which are more likely to be impacted by a natural hazard. This mapping is based on a set of contributing factors like annual/peak rainfall, land-cover, soil type, soil moisture, drainage capacity and many more, depending upon the region and the hazard being studied. Susceptibility mapping can broadly be divided into two categories. The first is an expert-based susceptibility mapping and, the second is, data-driven susceptibility mapping. In expert-based susceptibility mapping, an expert who is familiar with the area as well as the given natural hazard ranks the various contributing factors using some ranking mechanism so as to determine the relative weights of each factor. An analytic hierarchy process (AHP) is a popular ranking mechanism for the susceptibility mapping due to its inherent robustness. Over the years, susceptibility maps of various regions have been prepared using this mechanism. A variation of AHP, i.e. a fuzzy-AHP assigns membership values to each criteria so as to make the comparison between various factors more flexible. Inventories of the natural hazards, which record their locations and extent, are an important tool for data-driven methods which use them as ground truth. Traditional data-driven methods like weight of evidence and frequency ratio, utilize these inventories to calculate priors and conditional probabilities and generate susceptibility maps based on these parameters.

Machine learning based models (both classical and deep learning based) perform supervised learning by treating these inventories as labeled datapoints (where hazard is a dependent variable and the corresponding factors like rainfall, land-cover, etc. are independent variables) and generate susceptibility maps for the given area. Both the expert-based analysis using AHP and data-driven models have their advantages as well as limitations. For the AHP based susceptibility mapping, although the overall process is simple to implement, the availability of regional experts is a must. Also, AHP based analysis might not be able to capture complex relationships that may exist between the influencing factors and the natural hazard. The machine learning models like random forest and deep learning models have the ability to capture these complex relationships. However, these models are dependent on the availability of good quality labeled data. This data might not be available for all regions. To overcome the shortcomings of each model, researchers have proposed hybrid susceptibility modeling, where the AHP and the machine learning are combined in some way so as to generate susceptibility maps of higher quality. The susceptibility mapping is crucial for predicting the natural hazards and mitigating the environmental risks they possess. Over the years, various machine learning models have been used to produce hazard susceptibility maps for a given region. However, the selection of an optimal machine learning model for a specific region and scenario remains a challenge.

### SUMMARY

Embodiments of the present disclosure present technological improvements as solutions to one or more of the above-mentioned technical problems recognized by the inventors in conventional systems. For example, in one embodiment, a method for selection of an optimal machine learning model for regional risk assessment associated with natural hazards is provided. The method includes preparing receiving via one or more hardware processors, a plurality of influencing factors for an expected hazard in a susceptible region. The plurality of influencing factors comprises one or more quantitative influencing factors, and one or more qualitative influencing factors. The one or more quantitative influencing factors includes a slope, an elevation, an aspect, and a Topographic Wetness Index (TWI) of the susceptible region, a distance of the susceptible region to water bodies, a distance of the susceptible region to nearby roads, a rainfall intensity in the susceptible region, a groundwater level in the susceptible region, a rainfall duration in the susceptible region, and a distance to faulty section within the susceptible region. Similarly, the one or more qualitative influencing factors includes a lithology information, a rock hardness, a geological information of one or more structures such as one or more folds, one or more joints, a soil type, a soil texture, a type of land-cover, a type of land-use and a type of vegetation. Further the method comprises applying, via the one or more hardware processors, one or more weights to each influencing factor from the plurality of influencing factors using an analytical hierarchy process (AHP) to obtain a set of weighted influencing factors. The AHP considers the expected hazard as the complex natural problem that depends upon the multiple qualitative influencing factors and the qualitative influencing factors. Further, the method comprises segregating, via the one or more hardware processors, (a) one or more quantitative influencing factor, and (b)one or more qualitative influencing factor from the set of weighted influencing factors. The weights are assigned based on the possible impact of the one or more quantitative influencing factors and the one or more qualitative influencing factors to obtain the set of weighted influencing factors. Further, the method comprises obtaining, via the one or more hardware processors, (a) a quantitative influencing factor contribution, and (b) a qualitative influencing factor contribution. The quantitative influencing factor contribution is obtained by aggregating an average value of the one or more quantitative influencing factor, and a value of one of the one or more quantitative influencing factor having a highest numeric value. The qualitative influencing factor contribution is obtained by aggregating an average value of the one or more qualitative influencing factor, and a value of one of the one or more qualitative influencing factor having the highest numeric value. Further, the method includes obtaining a factor-based contribution by subtracting the quantitative influencing factor contribution from the qualitative influencing factor contribution to analyses a complexity of a nature of relationship between the one or more quantitative influencing factor and the one or more qualitative influencing factor. The method utilizes both the average value of the one or more qualitative influencing factors, and the maximum value of the one or more qualitative influencing factors to determine an individual contribution of the qualitative towards the selection of the optimal ML model. Similarly, the method utilizes both the average value of the one or more quantitative influencing factors, and the maximum value of the one or more quantitative influencing factors to determine an individual contribution of the qualitative towards the selection of the optimal ML model. Further, the method includes obtaining a sample-based contribution by providing a total number of one or more labeled samples available for the susceptible region for the expected hazard into a first empirical function. The first empirical function utilizes a first user defined parameter based on the quality of each of the one or more labelled samples and a total size of the susceptible region for the expected hazard. Further, the method includes obtaining a resolution-based contribution by providing spatial resolution of each of a plurality of raster images available for the susceptible region for the expected hazard into a second empirical function, wherein the second empirical function utilizes a second user defined parameter based on a distance metric used by the end-user for specifying the spatial-resolution. Further, the method includes assigning one or more weights to the factor-based contribution, the sample-based contribution, and the resolution-based contribution to obtain a weighted sum of factor-based contribution, a weighted sum of sample-based contribution, and a weighted sum of resolution-based contribution. Further, the method includes generating a selection score by combining the weighted sum of factor-based contribution, the weighted sum of sample-based contribution, and the weighted sum of resolution-based contribution to obtain a selection score. The selection score is further provided with a dampening factor. The dampening factor is a geometric mean of the weighted sum of factor-based contribution, the weighted sum of sample-based contribution, and the weighted sum of resolution-based contribution. Further, the method includes providing, via the one or more hardware processors, the selection score to a pre-classified machine learning models to select an optimal ML model suitable for assessment of the expected hazard in the susceptible region based on the selection score. The pre-classified machine learning models comprises a plurality of sets, each set comprises a plurality of machine leaning models. A first set of the plurality of sets includes a random chance model, a naive bayes classifier model, a logistic regression classifier model, and a support vector classifier model. A second set of the plurality of sets includes a support vector classifier with kernel model, a random forest classifier model, and a shallow neural networks (fully connected) model. A third set of the plurality of sets includes a deep fully connected neural network, a convolutional neural network, and a deep convolutional neural network.

In another aspect, a system for the selection of an optimal machine learning model for regional risk assessment associated with natural hazards is provided. The system includes at least one memory storing programmed instructions; one or more Input /Output (I/O) interfaces; and one or more hardware processors, and a risk assessment model 110 operatively coupled to a corresponding at least one memory, wherein the system is configured to prepare receive a plurality of influencing factors for an expecting hazard in a susceptible region. The plurality of influencing factors comprises one or more quantitative influencing factors, and one or more qualitative influencing factors. The one or more quantitative influencing factors includes a slope, an elevation, an aspect, and a TWI of the susceptible region, a distance of the susceptible region to water bodies, a distance of the susceptible region to nearby roads, a rainfall intensity in the susceptible region, a groundwater level in the susceptible region, a rainfall duration in the susceptible region, and a distance to faulty section within the susceptible region. Similarly, the one or more qualitative influencing factors includes a lithology information, a rock hardness, a geological information of one or more structures such as one or more folds, one or more joints, a soil type, a soil texture, a type of land-cover, a type of land-use and a type of vegetation. The system is configured to apply one or more weights to each influencing factor from the plurality of influencing factors using an analytical hierarchy process (AHP) to obtain a set of weighted influencing factors. The AHP considers the expected hazard as the complex natural problem that depends upon the multiple qualitative influencing factors and the qualitative influencing factors. The system is configured to segregate (a) one or more quantitative influencing factor, and (b) one or more qualitative influencing factor from the set of weighted influencing factors. The weights are assigned based on the possible impact of the one or more quantitative influencing factors and the one or more qualitative influencing factors to obtain the set of weighted influencing factors. The system is configured to obtain (a) a quantitative influencing factor contribution, and (b) a qualitative influencing factor contribution. The quantitative influencing factor contribution is obtained by aggregating an average value of the one or more quantitative influencing factor, and a value of one of the one or more quantitative influencing factor having a highest numeric value. The qualitative influencing factor contribution is obtained by aggregating an average value of the one or more qualitative influencing factor, and a value of one of the one or more qualitative influencing factor having a highest numeric value. The system is configured to obtain a factor-based contribution by subtracting the quantitative influencing factor contribution from the qualitative influencing factor contribution to analyse a complexity of a nature of relationship between the one or more quantitative influencing factor and the one or more qualitative influencing factor. The system utilizes both the average value of the one or more qualitative influencing factors, and the maximum value of the one or more qualitative influencing factors to determine an individual contribution of the qualitative towards the selection of the optimal ML model. Similarly, the system utilizes both the average value of the one or more quantitative influencing factors, and the maximum value of the one or more quantitative influencing factors to determine an individual contribution of the qualitative towards the selection of the optimal ML model. The system is configured to obtain a sample-based contribution by providing a total number of one or more labeled samples available for the susceptible region for the expected hazard into a first empirical function. The first empirical function utilizes a first user defined parameter based on a quality of each of the one or more labelled samples and a total size of the susceptible region for the expected hazard. The system is configured to obtain a resolution-based contribution by providing spatial resolution of each of a plurality of raster images available for the susceptible region for the expected hazard into a second empirical function, wherein the second empirical function utilizes a second user defined parameter based on a distance metric used by the end-user for specifying the spatial-resolution. The system is configured to assign one or more weights to the factor-based contribution, the sample-based contribution, and the resolution-based contribution to obtain a weighted sum of factor-based contribution, a weighted sum of sample-based contribution, and a weighted sum of resolution-based contribution. The system is configured to generate a selection score by combining the weighted sum of factor-based contribution, the weighted sum of sample-based contribution, and the weighted sum of resolution-based contribution to obtain a selection score. The selection score is further provided with a dampening factor. The dampening factor is a geometric mean of the weighted sum of factor-based contribution, the weighted sum of sample-based contribution, and the weighted sum of resolution-based contribution. The system is configured to provide the selection score to a pre-classified machine learning models to select an optimal ML model suitable for assessment of the expected hazard in the susceptible region based on the selection score. The pre-classified machine learning models comprises a plurality of sets, each set comprises a plurality of machine leaning models. A first set of the plurality of sets includes a random chance model, a naive bayes classifier model, a logistic regression classifier model, and a support vector classifier model. A second set of the plurality of sets includes a support vector classifier with kernel model, a random forest classifier model, and a shallow neural networks (fully connected) model. A third set of the plurality of sets includes a deep fully connected neural network, a convolutional neural network, and a deep convolutional neural network.

In yet another aspect, there are provided one or more non-transitory machine-readable information storage mediums comprising one or more instructions for the selection of an optimal machine learning model for regional risk assessment associated with natural hazards is provided. The one or more non-transitory machine-readable information storage mediums when executed by the one or more hardware processors cause: receiving a plurality of influencing factors for an expecting hazard in a susceptible region. The plurality of influencing factors comprises one or more quantitative influencing factors, and one or more qualitative influencing factors. The plurality of influencing factors comprises one or more quantitative influencing factors, and one or more qualitative influencing factors. The one or more quantitative influencing factors includes a slope, an elevation, an aspect, and a TWI of the susceptible region, a distance of the susceptible region to water bodies, a distance of the susceptible region to nearby roads, a rainfall intensity in the susceptible region, a groundwater level in the susceptible region, a rainfall duration in the susceptible region, and a distance to faulty section within the susceptible region. Similarly, the one or more qualitative influencing factors includes a lithology information, a rock hardness, a geological information of one or more structures such as one or more folds, one or more joints, a soil type, a soil texture, a type of land-cover, a type of land-use and a type of vegetation. The one or more non-transitory machine-readable information storage mediums when executed by the one or more hardware processors cause: applying one or more weights to each influencing factor from the plurality of influencing factors using an analytical hierarchy process (AHP) to obtain a set of weighted influencing factors. The AHP considers the expected hazard as the complex natural problem that depends upon the multiple qualitative influencing factors and the qualitative influencing factors. The system is configured to segregate (a) one or more quantitative influencing factor, and (b) one or more qualitative influencing factor from the set of weighted influencing factors. The weights are assigned based on the possible impact of the one or more quantitative influencing factors and the one or more qualitative influencing factors to obtain the set of weighted influencing factors. The one or more non-transitory machine-readable information storage mediums when executed by the one or more hardware processors cause: obtaining (a) a quantitative influencing factor contribution, and (b) a qualitative influencing factor contribution. The quantitative influencing factor contribution is obtained by aggregating an average value of the one or more quantitative influencing factor, and a value of one of the one or more quantitative influencing factor having a highest numeric value. The qualitative influencing factor contribution is obtained by aggregating an average value of the one or more qualitative influencing factor, and a value of one of the one or more qualitative influencing factor having a highest numeric value, obtaining a factor-based contribution by subtracting the quantitative influencing factor contribution from the qualitative influencing factor contribution to analyse a complexity of a nature of relationship between the one or more quantitative influencing factor and the one or more qualitative influencing factor. The system utilizes both the average value of the one or more qualitative influencing factors, and the maximum value of the one or more qualitative influencing factors to determine an individual contribution of the qualitative towards the selection of the optimal ML model. Similarly, the system utilizes both the average value of the one or more quantitative influencing factors, and the maximum value of the one or more quantitative influencing factors to determine an individual contribution of the qualitative towards the selection of the optimal ML model. The one or more non-transitory machine-readable information storage mediums when executed by the one or more hardware processors cause: obtaining a sample-based contribution by providing a total number of one or more labeled samples available for the susceptible region for the expected hazard into a first empirical function. The first empirical function utilizes a first user defined parameter based on a quality of each of the one or more labelled samples and a total size of the susceptible region for the expected hazard. The one or more non-transitory machine-readable information storage mediums when executed by the one or more hardware processors cause: obtaining a resolution-based contribution by providing spatial resolution of each of a plurality of raster images available for the susceptible region for the expected hazard into a second empirical function, wherein the second empirical function utilizes a second user defined parameter based on a distance metric used by the end-user for specifying the spatial-resolution. The one or more non-transitory machine-readable information storage mediums when executed by the one or more hardware processors cause: assigning one or more weights to the factor-based contribution, the sample-based contribution, and the resolution-based contribution to obtain a weighted sum of factor-based contribution, a weighted sum of sample-based contribution, and a weighted sum of resolution-based contribution. The one or more non-transitory machine-readable information storage mediums when executed by the one or more hardware processors cause: generating a selection score by combining the weighted sum of factor-based contribution, the weighted sum of sample-based contribution, and the weighted sum of resolution-based contribution to obtain a selection score. The selection score is further provided with a dampening factor. The dampening factor is a geometric mean of the weighted sum of factor-based contribution, the weighted sum of sample-based contribution, and the weighted sum of resolution-based contribution. The one or more non-transitory machine-readable information storage mediums when executed by the one or more hardware processors cause: providing the selection score to a pre-classified machine learning models to select an optimal ML model suitable for assessment of the expected hazard in the susceptible region based on the selection score. The pre-classified machine learning models comprises a plurality of sets, each set comprises a plurality of machine leaning models. A first set of the plurality of sets includes a random chance model, a naive bayes classifier model, a logistic regression classifier model, and a support vector classifier model. A second set of the plurality of sets includes a support vector classifier with kernel model, a random forest classifier model, and a shallow neural networks (fully connected) model. A third set of the plurality of sets includes a deep fully connected neural network, a convolutional neural network, and a deep convolutional neural network.

It is to be understood that both the foregoing general description and the following detailed description are exemplary and explanatory only and are not restrictive of the invention, as claimed.

### BRIEF DESCRIPTION OF DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system 100 of selecting a machine learning model for a regional risk assessment, according to some embodiments of the present disclosure.
FIGS. 2A, 2B and 2C are flow diagrams of an illustrative method 200 of the selection of the machine learning model for the regional risk assessment, using the system of FIG. 1, according to some embodiments of the present disclosure.
FIG. 3 illustrates a three-tier classification of machine learning (ML) models guided by a selection score, according to some embodiments of the present disclosure.

### DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Risk mapping for a particular region with respect to a natural hazard can be performed using an expert-driven approach or data-driven models. An expert-driven approach usually involves an expert familiar with the region and the hazard identifying the various influencing factors which can affect the onset and extent of that hazard in the region. Then, a comparison framework, like AHP or Fuzzy-AHP is used to determine the relative importance of each influencing factor with respect to others. Data-driven models try to learn the relationship between the influencing factors and the hazard by learning the priors and conditional probabilities in some form. This requires the availability of labeled data for the region. Over the years, more and more machine learning models like Random Forest, fully connected neural networks, convolutional neural networks, etc. have been utilized to develop risk maps for various regions around the world. While the various machine learning models have been employed successfully for risk analysis over the years, the selection of an optimal machine learning model for risk analysis of a given region remains an under-explored area. There are no existing systems/methodologies which can guide the end-user regarding the most optimal machine learning model for risk analysis, which would vary depending upon the area, the hazard and the number of training samples, among other things. To overcome this challenge, the present disclosure provides a method and system to guide the end-user regarding the optimal ML model selection. The present disclosure considers below three factors that affects the selection of the ML model for the risk analysis:
1. Nature of relationship between the influencing factors and the hazard.
2. Number of labeled samples present for a region.
3. Resolution of the input raster images.

A contribution of each of these factors are combined in a unique way to generate a final score, that indicate the class of models that is considered to be most ideal for a given region for conducting the risk analysis.

The present invention provides a method of selecting a machine learning (ML) model for regional risk assessment of a susceptible region. State-of-the-art methods provide various machine learning models for risk assessment that provides hazard susceptibility maps. However, the selection of an optimal machine learning model for the susceptible region remains a challenge. The method utilizes an analysis of a plurality of factors (qualitative and quantitative) that are influenced due to change in ecological environment of a suspectable region prior to an onset of the hazard. The method involves generating an individual scores based on assessment of (a) qualitative and quantitative influencing factors, (b) availability of labelled samples, and (c) resolution level of images of the suspectable region. One or more weights are assigned to each individual scores. The weighted individual scores are combined, and a dampening factor is introduced that prevents bias of selection. The selection score thus obtained is scanned through to a pre-classified machine learning models to select an optimal ML model suitable for assessment of the expected hazard in the susceptible region based on the selection score.

As used herein, the term '*hazard*' refers to one or more natural hazards like floods, landslides and the like. These hazards are considered as can be defined as "extreme natural events", that cause loss of lives and damage to property.

As used herein, the term '*influencing factors,* refers to all the factors which are expected to affect the likelihood, severity, or impact of a natural hazard.

As used herein, the terms '*analytical hierarchy process,* and '*AHP*' refers to a multi-criteria decision-making framework, which was first proposed by *Thomas Saaty* in the 1970s.

As used herein, the term '*susceptible region*' refers to a region where an expected hazard is likely to occur.

As used herein, the term '*labeled samples*' refers to samples (sample images) from the susceptible region wherein pixels of the samples are analyzed to identify whether a particular pixel in the susceptible region is affected by ay similar hazard in the past. These labeled samples may represent a binary relationship, indicating hazard/no-hazard, or can also represent the magnitude and/or the intensity of the hazard using appropriate classification.

As used herein, the term '*spatial resolution*' refers to raster images of the susceptible region wherein, size of each pixel of the raster image represents a distance (in appropriate distance units like meter, centimeter etc.) in the image. The lower the size of the pixel, higher is the level of detail and thus the spatial resolution.

As used herein, the term *'complexity'* refers to an ability of a ML model to learn complex relationships between dependent variables (hazard/no-hazard labels) and an independent variables (such as influencing factors like slope, elevation, landcover, etc.).

As used herein, the term *'optimal machine learning (ML) model'* or *'optimal ML model'* refers to a machine learning model that results in an accurate prediction of an expected hazard based on selection of one or more qualitative influencing factors and one or more qualitative influencing factors relevant to the expected hazard

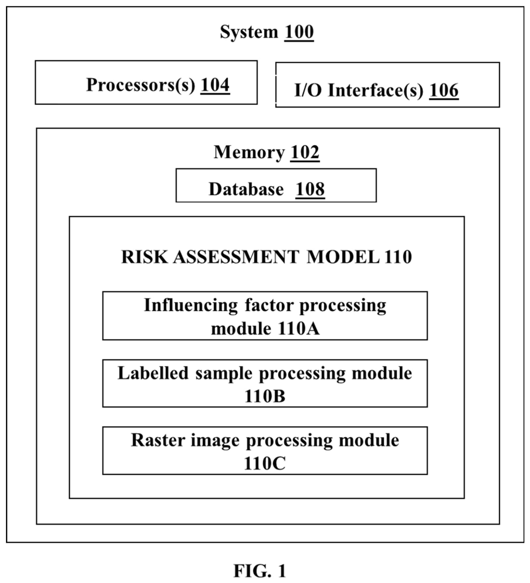

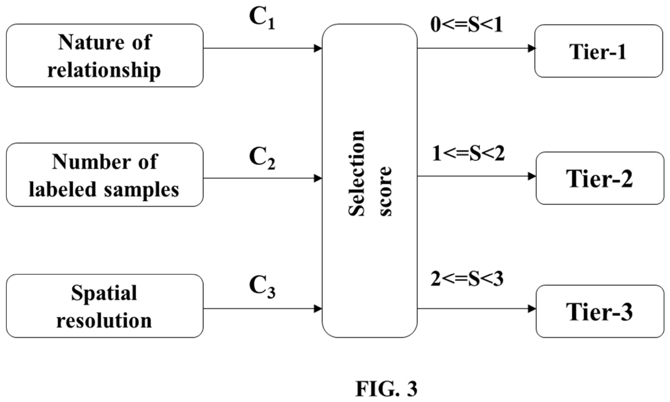

Referring now to the drawings, and more particularly to FIG. 1 through FIG. 3, where similar reference characters denote corresponding features consistently throughout the figures, there are shown preferred embodiments, and these embodiments are described in the context of the following exemplary system and/or method.

FIG. 1 illustrates an exemplary block diagram of a system 100 of selecting a machine learning model for a regional risk assessment, according to some embodiments of the present disclosure.

In an embodiment, the system 100 includes a processor(s) 104,communication interface device(s) 106, alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100. Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102.

In an embodiment, the system 100 can be implemented in a variety of computing systems including laptop computers, notebooks, hand-held devices such as mobile phones, workstations, mainframe computers, servers, and the like. The I/O interface(s) 106 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like.

In an embodiment, the I/O interface (s) 106 can include one or more ports for connecting to number of external devices or to another server or devices. The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 102 includes a risk assessment model 110, and an influencing factor processing module 110A, a labelled sample processing module 110B, and a raster image processing module 110C.

The risk assessment model 110 processes a plurality of influencing factors for an expecting hazard in a susceptible region using an analytical hierarchy process (AHP) to derive a set of weighted influencing factors. The set of weighted influencing factors comprises one or more quantitative influencing factors, and one or more qualitative influencing factors. The risk assessment model 110 utilizes the one or more quantitative influencing factors, and the one or more qualitative influencing factors to calculate a quantitative influencing factor contribution, and a quantitative influencing factor contribution respectively. The quantitative influencing factor contribution is obtained by aggregating an average value of the one or more quantitative influencing factor, and a value of one of the one or more quantitative influencing factor having a highest numeric value. The qualitative influencing factor contribution is obtained by aggregating an average value of the one or more qualitative influencing factor, and a value of one of the one or more qualitative influencing factor having a highest numeric value. The Influencing factor processing module 110A calculates a factor-based contribution by subtracting the quantitative influencing factor contribution from the qualitative influencing factor contribution to analyse a complexity of a nature of relationship between the one or more quantitative influencing factor and the one or more qualitative influencing factor. Further, the Labelled sample processing module 110B calculates a sample-based contribution by providing a total number of one or more labeled samples available for the susceptible region for the expected hazard into a first empirical function, wherein the first empirical function utilizes a first user defined parameter based on a quality of each of the one or more labelled samples and a total size of the susceptible region for the expected hazard.

Finally, Raster image processing module 110C calculates a resolution-based contribution by providing spatial resolution of each of a plurality of raster images available for the susceptible region for the expected hazard into a second empirical function, wherein the second empirical utilizes a second user defined parameter based on a distance among one or more neighboring pixels of the susceptible region for the expected hazard. The risk assessment model 110 aggregates a weighted sum of factor-based contribution, a weighted sum of sample-based contribution, and a weighted sum of resolution-based contribution, and a dampening factor is introduced to obtain a selection score. The risk assessment model 110 takes the selection score to a pre-classified machine learning models to select an optimal ML model suitable for assessment of the expected hazard in the susceptible region based on the selection score.

The memory 102 further comprises of a plurality of modules that includes programs or coded instructions that supplement applications or functions performed by the system 100 for executing different steps involved in the analysis of the health of the subject, being performed by the system 100. The modules, amongst other things, can include routines, programs, objects, components, and data structures, which perform particular tasks or implement particular abstract data types. The modules may also be used as signal processor(s), node machine(s), logic circuitries, and/or any other device or component that manipulates signals based on operational instructions. Further, the modules can be used by hardware, by computer-readable instructions executed by the one or more hardware processors 104, or by a combination thereof. The modules may include computer-readable instructions that supplement applications or functions performed by the system 100. Further, the memory 102 may comprise information pertaining to input(s)/output(s) of each step performed by the processor(s) 104 of the system100 and methods of the present disclosure. Further, the memory 102 includes a database 108. The database (or repository) 108 may include a plurality of abstracted piece of code for refinement and data that is processed, received, or generated as a result of the execution of the plurality of modules. The external database is communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

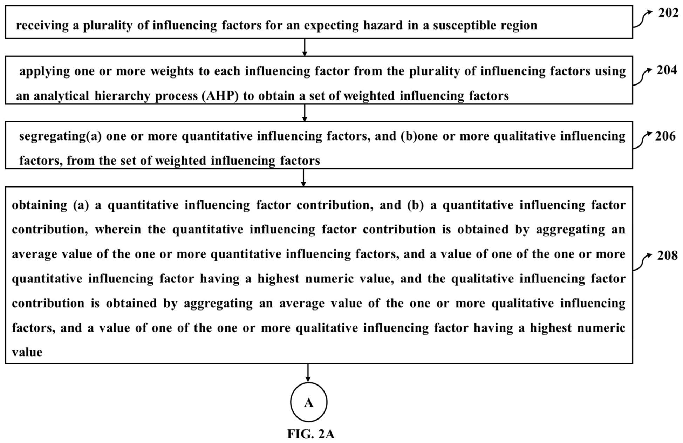

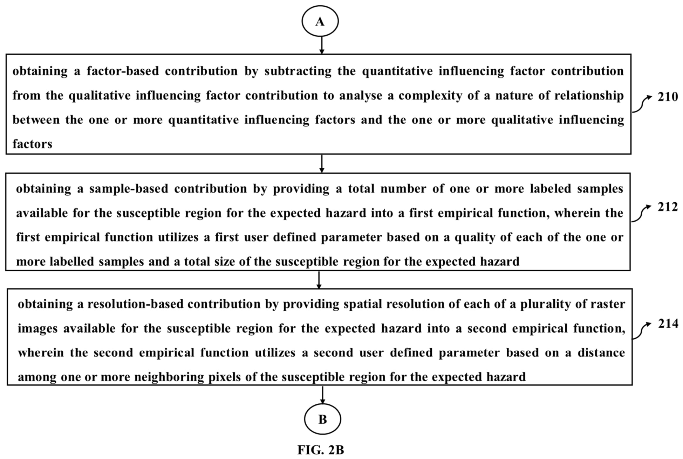

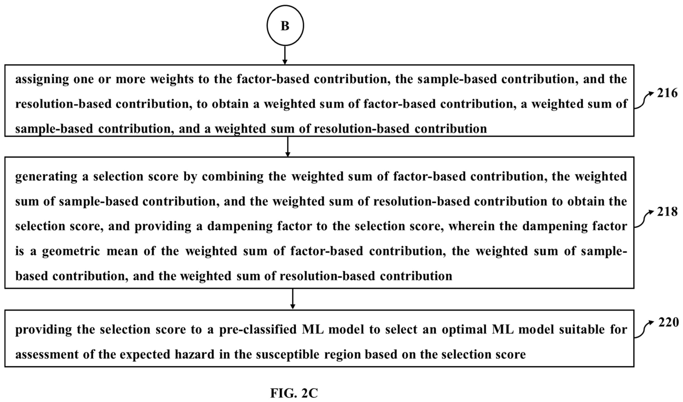

FIGS. 2A, 2B and 2C are flow diagrams of an illustrative method 200 of the selection of the machine learning model for the regional risk assessment, using the system of FIG. 1, according to some embodiments of the present disclosure.

The steps of the method 200 of the present disclosure will now be explained with reference to the components or blocks of the system 100 as depicted in FIG. 1. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method 200, the one or more hardware processors 104 are configured to receive a plurality of influencing factors for an expecting hazard in a susceptible region. A hazard susceptibility is recognized as the likelihood of hazard occurrence in a given region and is closely related to the characteristics of the geographical factors which are expressed quantitatively as well as quantitatively. The analysis of quantitative influencing factors and qualitative influencing factors reveals relevant information for predicting the expected hazard. The plurality of influencing factors comprises one or more quantitative influencing factors, and one or more qualitative influencing factors. The one or more quantitative influencing factors includes a slope, an elevation, an aspect, and a TWI of the susceptible region, a distance of the susceptible region to water bodies, a distance of the susceptible region to nearby roads, a rainfall intensity in the susceptible region, a groundwater level in the susceptible region, a rainfall duration in the susceptible region, and a distance to faulty section within the susceptible region.

Similarly, the qualitative influencing factor manipulating the hazard comprises a lithology information, a rock hardness, a geological information of one or more structures such as one or more folds, one or more joints, a soil type, a soil texture, a type of land-cover, a type of land-use and a type of vegetation. The quantitative influencing factors are more likely to have simpler relationships with the likelihood and extent of a natural hazard while the qualitative influencing factors are more likely to have complicated relationships. For example, the likelihood of flooding in a particular area of a given region would be inversely proportional to the distance of that area from a water body. Landslides which are triggered due to human activities like construction, the distance from roads would be directly proportional to the likelihood of such landslides. For the qualitative influencing factors, the relationship might not be this straightforward. Soil with poor water retention capacity would lead to greater chances of surface runoff, increasing the likelihood of shallow landslides. However, due to lower soil weight and less water accumulation, the soil might not get saturated enough, reducing chances of landslides triggered by soil saturation and stress on slopes. If the quantitative influencing factors are more dominant as compared to qualitative influencing factors in a given area, it makes more sense if simpler models like logistic Regression (LR), or support vector classifier (SVC) are selected as compared to models like random forest (RF) and deep neural network (DNN), since RF and DNN can get distracted by non-linear interactions that would be insignificant for the overall prediction. However, if qualitative influencing factors dominate over quantitative ones, the RF and DNN becomes the preferred choice as the simpler models like LR cannot capture non-linear relationships.

At step 204 of the method 200, the one or more hardware processors 104 are configured to apply one or more weights to each influencing factor from the plurality of influencing factors using an analytical hierarchy process (AHP) to obtain a set of weighted influencing factors. The AHP is a popular ranking mechanism for susceptibility mapping due to its inherent robustness. Over the years, susceptibility maps of various regions have been prepared using this AHP method. A variation of the AHP, i.e. fuzzy-AHP assigns membership values to each criteria so as to make the comparison between various factors more flexible. The AHP assists in breaking a complex problem in the different simple criteria and the criteria are given weightage according to their relative importance. A complex problem is the one which depends upon multiple causative factors. In the present invention, the expected hazard is the complex natural problem which depends upon the multiple qualitative influencing factors and the qualitative influencing factors. The weights are assigned based on the possible impact of the qualitative influencing factors and the qualitative influencing to obtain the set of weighted influencing factors.

At step 206 of the method 200, the one or more hardware processors 104 are configured to segregate (a) one or more quantitative influencing factor, and (b) one or more qualitative influencing factors, from the set of weighted influencing factors. The nature of relationship between the quantitative influencing factors, the qualitative influencing factors and the expected hazard is unpredictable and varies from a simpler correlation to a complex correlation. While there is no known mathematical test to determine this relationship, therefore, in the present invention the nature of relationship is approximated using the quantitative influencing factors and the qualitative influencing factors. An expert-based analysis for the region gives the valuable insights about the nature of this relationship. Once the weights are determined, the one or more qualitative influencing factors and the one or more quantitative influencing factors are segregated. The segregated quantitative influencing factors includes distance to roads, distance to water body, elevation, and other factors which can be represented based on their magnitude. And the segregated qualitative influencing factors includes geology of the region, land-use/land-cover, soil-type and other factors which are represented using the appropriate sub-class.

At step 208 of the method 200, the one or more hardware processors 104 are configured to obtain (a) a quantitative influencing factor contribution, and (b) a qualitative influencing factor contribution. The quantitative influencing factor contribution is obtained by aggregating an average value of the one or more quantitative influencing factor, and a value of one of the one or more quantitative influencing factor having a highest numeric value. The qualitative influencing factor contribution is obtained by aggregating an average value of the one or more qualitative influencing factor, and a value of one of the one or more qualitative influencing factor having a highest numeric value. The model 110 utilizes both the average value of the one or more qualitative influencing factors and the maximum value of the one or more qualitative influencing factors to determine an individual contribution of the qualitative towards the selection of the optimal ML model. Similarly, the model 110 utilizes both the average value of the one or more quantitative influencing factors and the maximum value of the one or more quantitative influencing factors to determine an individual contribution of the quantitative towards the selection of the optimal ML model.

At step 210 of the method 200, the one or more hardware processors 104 are configured to obtain a factor-based contribution by subtracting the quantitative influencing factor contribution from the qualitative influencing factor contribution to analyse a complexity of a nature of relationship between the one or more quantitative influencing factor and the one or more qualitative influencing factor. Let the qualitative influencing factors and the quantitative influencing factors be represented by (*u*₁, *m*₁) and (*u*₂, *m*₂) respectively, where (*uᵢ, mᵢ*) are the average value and the maximum value for each group of the influencing factors (qualitative influencing factors and quantitative influencing factors). The factor-based contribution, C₁ due to the nature of relationship between the influencing factors and the hazard is given by: ${C}_{1} = {u}_{1}^{\left(1-{w}_{1}\right)} ∗ {m}_{1} {w}_{1} - {u}_{2}^{\left(1-{w}_{2}\right)} ∗ {m}_{2} {w}_{2}$ $where {w}_{i} = \frac{1}{\left(1+exp\left(-\left(mi-ui\right)/ui\right)\right)}$

It is observed in the present disclosure that the difference between the one or more quantitative influencing factors and the one or more qualitative influencing factors is that the qualitative influencing factors shift the optimal ML model selection towards more complex models like the random forests, and neural networks while the quantitative influencing factors shift the optimal ML model selection towards simpler models like LR, Naive Bayes and the like. The overall selection is based on relative contribution of both the one or more quantitative influencing factors as well as the one or more qualitative influencing factors. The weight term 'wᵢ' for each group ensures that the relative contribution is influenced by both average and maximum values. Without this term, the maximum value dominates the average value. The value of C₁ would be between [-1,1], and after calculation this value is normalized between [0,1], using a simple mapping.

At step 212 of the method 200, the one or more hardware processors 104 are configured to obtain a obtain a sample-based contribution by providing a total number of one or more labeled samples available for the susceptible region for the expected hazard into a first empirical function. The first empirical function utilizes a first user defined parameter based on a quality of each of the one or more labelled samples and a total size of the susceptible region for the expected hazard. The total number of one or more labeled samples available from the susceptible region greatly influences the selection of the optimal ML model for predicting expected hazard in the susceptible region. The sample-based contribution C2 due to the total number of samples is given by: ${C}_{2} = \frac{2}{\left(1+exp\left(-n/a\right)\right)} - 1$
where 'n' represents the number of labeled samples
As n approaches ∞, C₂ approaches 1
As n approaches 0, C₂ approaches 0

The parameter '*a*' is set by the end-user, who specifies it depending on various factors like the quality of the one or more labeled samples, the total area of the susceptible region under analysis, and any other one or more local factors which appears to be significant to the end-user. The basic intuition behind this function is simple, if we have a small number of labeled samples available, simpler model selection for expected hazard analysis are preferred as they prevents overfitting. Thus, the output of the above function for a small *'n'* is low, and it increase as *'n'* increases. As the number of labeled samples increase, models like RF and DNNs are expected to be more suited for learning. The exponential function formulation is based upon an empirical evidence.

At step 214 of the method 200, the one or more hardware processors 104 are configured to obtain a obtain a resolution-based contribution by providing spatial resolution of each of a plurality of raster images available for the susceptible region for the expected hazard into a second empirical function. The second empirical function utilizes a second user defined parameter based on a distance metric used by the end-user for specifying the spatial-resolution. When the spatial resolution of the input raster image is high, more information about a particular pixel can be derived from the neighboring pixels. However, when the spatial resolution of the input raster image is low, neighboring pixels might be completely different in terms of the spectral and the spatial properties. Therefore based on an increases in the spatial resolution, the ML models that derives information from the surroundings of a particular pixel like convolutional neural network (CNNs), fully convolutional neural network (FCNNs) are preferred over the ML models that performs point-based analysis, like SVC and LR. In accordance with this, the spatial-based contribution C₃ due to spatial resolution is represented as: ${C}_{3} = exp \left(\frac{- x}{b}\right)$ or ${C}_{3} = \frac{2}{1 + exp \left(\frac{x}{b}\right)}$ where x = spatial resolution in appropriate distance units, 'b' is end-user configurable parameter based on various factors like the distance units used. As the spatial resolution increases, value of C₃ using either of the above expressions also increases. As '*x*' approaches 0 (highest possible spatial resolution), the value of C₃ becomes 1, while when '*x*' approaches ∞, value of C₃ becomes 0. Thus, the value of C₃ also varies in the range [0, 1].

At step 216 of the method 200, the one or more hardware processors 104 are configured to assign one or more weights to the factor-based contribution, the sample-based contribution, and the resolution-based contribution to obtain a weighted sum of factor-based contribution, a weighted sum of sample-based contribution, and a weighted sum of resolution-based contribution. The one or more weights to each factor-based contribution, the sample-based contribution, and the resolution-based contribution are assigned at the user-end based on the nature of relationship sought for the expected hazard prediction. The assignment of weights represent the importance which the user intends to give to each contributing factor while selecting the optimal ML model.

At step 218 of the method 200, the one or more hardware processors 104 are configured to generate a selection score. The selection score combines the weighted sum of factor-based contribution, the weighted sum of sample-based contribution, and the weighted sum of resolution-based contribution to obtain a selection score, and a dampening factor. The dampening factor is a geometric mean of the weighted sum of factor-based contribution, the weighted sum of sample-based contribution, and the weighted sum of resolution-based contribution. The dampening factor is provided to the aggregate of the weighted score to remove a bias. The bias arises when one of the weighted score from the weighted score of factor-based contribution, the weighted score of sample-based contribution, and the weighted score of resolution-based contribution is extremely low, while other two are relatively high. In such scenario, the overall score tend to be closer to the one or more influencing factors with higher magnitude. In an ideal scenario, the score is expected to be equal to the value of the lowest contributing factor, since the model selection is restricted by this value. To ensure this behavior, the dampening factor '*D*' is provided to the aggregated score as: $S = D ∗ \left({w}_{1}∗{C}_{1}+{w}_{2}∗{C}_{2}+{w}_{3}∗{C}_{3}\right)$ $Where D = {\left({C}_{1}∗{C}_{2}∗{C}_{3}\right)}^{1 / 3}$

The dampening factor '*D*' is a geometric mean of the three individual contributions. If one of them is lower as compared to the other two, the dampening factor would ensure that the final score is closer to the lowest contribution.

At step 220 of the method 200, the one or more hardware processors 104 are configured to provide the selection score to a pre-classified ML models to select an optimal ML model suitable for assessment of the expected hazard in the susceptible region based on the selection score. The ML models are classified on three tiers, viz. Tier-1, Tier-2 and Tier-3. The Tier-1 of the pre-classified (the three tier classification) ML models comprises a random chance model, a naive bayes classifier model, a logistic regression classifier model, and a support vector classifier model. TheTier-2 of the pre-classified ML models comprises a support vector classifier with kernel mode, a random forest classifier model, and a shallow neural networks (fully connected) model. The Tier-3 of the pre-classified ML models comprises a deep fully connected neural networks, a convolutional neural networks, and a deep convolutional neural networks. The selection score is represented on a scale of 0 to 3. The Tier-1 ML models are suitable for the analysis of the expected hazards when the selection score falls between 0-1. The Tier-2 ML models are suitable for the analysis of the expected hazards when the selection score falls between 1-2. And the Tier-3 ML models are suitable for the analysis of the expected hazards when the selection score falls between 2-3.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the present disclosure or if they include equivalent elements with insubstantial differences from the literal language of the embodiments described herein.

Therefore, the method of selecting a machine learning (ML) model for regional risk assessment of susceptible region according to the present invention successfully analysed the plurality of factors (qualitative and quantitative) that are influenced due to change in ecological environment of the suspectable region prior to an onset of the hazard. The method generates an individual scores based on assessment of the plurality of factors, availability of labelled samples, and resolution level of images of the suspectable region. Each individual score is combined to obtain a selection score. The selection score is scanned to a pre-classified ML models to select an optimal ML model suitable for assessment of the expected hazard based on the selection score. The method guides the user based on empirical and observational evidence that helps the user to suggest the most suitable ML model that and thus results in accurate prediction of the expected hazards.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for selecting a machine learning (ML) model for regional risk assessment, the method comprising:
receiving (202), via one or more hardware processors, a plurality of quantitative influencing factors for an expecting hazard in a susceptible region;
applying (204), via the one or more hardware processors, one or more weights to each influencing factor from the plurality of influencing factors using an analytical hierarchy process (AHP) to obtain a set of weighted influencing factors;
segregating (206), via the one or more hardware processors, (a) one or more quantitative influencing factors, and (b) one or more qualitative influencing factors, from the set of weighted influencing factors;
obtaining (208), via the one or more hardware processors, (a) a quantitative influencing factor contribution, and (b) a quantitative influencing factor contribution, wherein
the quantitative influencing factor contribution is obtained by aggregating an average value of the one or more quantitative influencing factors, and a value of one of the one or more quantitative influencing factor having a highest numeric value, and
the qualitative influencing factor contribution is obtained by aggregating an average value of the one or more qualitative influencing factors, and a value of one of the one or more qualitative influencing factor having a highest numeric value;
obtaining (210), via the one or more hardware processors, a factor-based contribution by subtracting the quantitative influencing factor contribution from the qualitative influencing factor contribution to analyse a complexity of a nature of relationship between the one or more quantitative influencing factors and the one or more qualitative influencing factors;
obtaining (212), via the one or more hardware processors, a sample-based contribution by providing a total number of one or more labeled samples available for the susceptible region for the expected hazard into a first empirical function, wherein the first empirical function utilizes a first user defined parameter based on a quality of each of the one or more labelled samples and a total size of the susceptible region for the expected hazard;
obtaining (214), via the one or more hardware processors, a resolution-based contribution by providing spatial resolution of each of a plurality of raster images available for the susceptible region for the expected hazard into a second empirical function, wherein the second empirical function utilizes a second user defined parameter based on a distance among one or more neighboring pixels of the susceptible region for the expected hazard;
assigning (216), via the one or more hardware processors, one or more weights to the factor-based contribution, the sample-based contribution, and the resolution-based contribution, to obtain a weighted sum of factor-based contribution, a weighted sum of sample-based contribution, and a weighted sum of resolution-based contribution;
generating (218), via the one or more hardware processors, a selection score by:
combining the weighted sum of factor-based contribution, the weighted sum of sample-based contribution, and the weighted sum of resolution-based contribution to obtain the selection score, and
providing a dampening factor to the selection score, wherein the dampening factor is a geometric mean of the weighted sum of factor-based contribution, the weighted sum of sample-based contribution, and the weighted sum of resolution-based contribution; and
providing (220), via the one or more hardware processors, the selection score to a pre-classified ML model to select an optimal ML model for assessment of the expected hazard in the susceptible region based on the selection score.

2. The method as claimed in claim 1, wherein the one or more quantitative influencing factor affecting the hazard comprises a slope, an elevation, an aspect, and a Topographic Wetness Index (TWI) of the susceptible region, a distance of the susceptible region to water bodies, a distance of the susceptible region to nearby roads, a rainfall intensity in the susceptible region, a groundwater level in the susceptible region, a rainfall duration in the susceptible region, and a distance to faulty section within the susceptible region.

3. The method as claimed in claim 1, wherein the one or more qualitative influencing factor manipulating the hazard comprises a lithology information, a rock hardness, a geological information of one or more structures such as one or more folds, one or more joints, a soil type, a soil texture, a type of land-cover, a type of land-use and a type of vegetation.

4. The method as claimed in claim 1, wherein the pre-classified machine learning model comprises a plurality of sets, each of the plurality of sets comprising a plurality of machine leaning models, and wherein
a first set of the plurality of sets includes a random chance model, a naive bayes classifier model, a logistic regression classifier model, and a support vector classifier model;
a second set of the plurality of sets includes a support vector classifier with kernel model, a random forest classifier model, and a shallow neural networks model; and
a third set of the plurality of sets includes a deep fully connected neural network, a convolutional neural network, and a deep convolutional neural network.

5. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a plurality of quantitative influencing factors for an expecting hazard in a susceptible region;
apply one or more weights to each influencing factor from the plurality of influencing factors using an analytical hierarchy process (AHP) to obtain a set of weighted influencing factors;
segregate (a) one or more quantitative influencing factors, and (b) one or more qualitative influencing factors, from the set of weighted influencing factors;
obtain (a) a quantitative influencing factor contribution, and (b) a quantitative influencing factor contribution, wherein
the quantitative influencing factor contribution is obtained by aggregating an average value of the one or more quantitative influencing factors, and a value of one of the one or more quantitative influencing factor having a highest numeric value, and
the qualitative influencing factor contribution is obtained by aggregating an average value of the one or more qualitative influencing factors, and a value of one of the one or more qualitative influencing factor having a highest numeric value;
obtain a factor-based contribution by subtracting the quantitative influencing factor contribution from the qualitative influencing factor contribution to analyse a complexity of a nature of relationship between the one or more quantitative influencing factors and the one or more qualitative influencing factors;
obtain a sample-based contribution by providing a total number of one or more labeled samples available for the susceptible region for the expected hazard into a first empirical function, wherein the first empirical function utilizes a first user defined parameter based on a quality of each of the one or more labelled samples and a total size of the susceptible region for the expected hazard;
obtain a resolution-based contribution by providing spatial resolution of each of a plurality of raster images available for the susceptible region for the expected hazard into a second empirical function, wherein the second empirical function utilizes a second user defined parameter based on a distance among one or more neighboring pixels of the susceptible region for the expected hazard;
assign one or more weights to the factor-based contribution, the sample-based contribution, and the resolution-based contribution, to obtain a weighted sum of factor-based contribution, a weighted sum of sample-based contribution, and a weighted sum of resolution-based contribution;
generate a selection score by:
combining the weighted sum of factor-based contribution, the weighted sum of sample-based contribution, and the weighted sum of resolution-based contribution to obtain the selection score, and
providing a dampening factor to the selection score, wherein the dampening factor is a geometric mean of the weighted sum of factor-based contribution, the weighted sum of sample-based contribution, and the weighted sum of resolution-based contribution; and
provide the selection score to a pre-classified ML model to select an optimal ML model for assessment of the expected hazard in the susceptible region based on the selection score.

6. The system as claimed in claim 5, wherein the one or more quantitative influencing factor affecting the hazard comprises a slope, an elevation, an aspect, and a TWI of the susceptible region, a distance of the susceptible region to water bodies, a distance of the susceptible region to nearby roads, a rainfall intensity in the susceptible region, a groundwater level in the susceptible region, a rainfall duration in the susceptible region, and a distance to faulty section within the susceptible region.

7. The system as claimed in claim 5, wherein the one or more qualitative influencing factor manipulating the hazard comprises a lithology information, a rock hardness, a geological information of one or more structures such as one or more folds, one or more joints, a soil type, a soil texture, a type of land-cover, a type of land-use and a type of vegetation.

8. The system as claimed in claim 5, wherein the pre-classified machine learning model comprises a plurality of sets, each of the plurality of sets comprising a plurality of machine leaning models, and wherein
a first set of the plurality of sets includes a random chance model, a naive bayes classifier model, a logistic regression classifier model, and a support vector classifier model,
a second set of the plurality of sets includes a support vector classifier with kernel model, a random forest classifier model, and a shallow neural networks model, and
a third set of the plurality of sets includes a deep fully connected neural network, a convolutional neural network, and a deep convolutional neural network.

9. One or more non-transitory machine-readable information storage mediums comprising one or more instructions which when executed by one or more hardware processors cause:
receiving a plurality of quantitative influencing factors for an expecting hazard in a susceptible region;
applying one or more weights to each influencing factor from the plurality of influencing factors using an analytical hierarchy process (AHP) to obtain a set of weighted influencing factors;
segregating (a) one or more quantitative influencing factors, and (b) one or more qualitative influencing factors, from the set of weighted influencing factors;
obtaining (a) a quantitative influencing factor contribution, and (b) a quantitative influencing factor contribution, wherein
the quantitative influencing factor contribution is obtained by aggregating an average value of the one or more quantitative influencing factors, and a value of one of the one or more quantitative influencing factor having a highest numeric value, and
the qualitative influencing factor contribution is obtained by aggregating an average value of the one or more qualitative influencing factors, and a value of one of the one or more qualitative influencing factor having a highest numeric value;
obtaining a factor-based contribution by subtracting the quantitative influencing factor contribution from the qualitative influencing factor contribution to analyse a complexity of a nature of relationship between the one or more quantitative influencing factors and the one or more qualitative influencing factors;
obtaining a sample-based contribution by providing a total number of one or more labeled samples available for the susceptible region for the expected hazard into a first empirical function, wherein the first empirical function utilizes a first user defined parameter based on a quality of each of the one or more labelled samples and a total size of the susceptible region for the expected hazard;
obtaining a resolution-based contribution by providing spatial resolution of each of a plurality of raster images available for the susceptible region for the expected hazard into a second empirical function, wherein the second empirical function utilizes a second user defined parameter based on a distance among one or more neighboring pixels of the susceptible region for the expected hazard;
assigning one or more weights to the factor-based contribution, the sample-based contribution, and the resolution-based contribution, to obtain a weighted sum of factor-based contribution, a weighted sum of sample-based contribution, and a weighted sum of resolution-based contribution;
generating a selection score by:
combining the weighted sum of factor-based contribution, the weighted sum of sample-based contribution, and the weighted sum of resolution-based contribution to obtain the selection score, and
providing a dampening factor to the selection score, wherein the dampening factor is a geometric mean of the weighted sum of factor-based contribution, the weighted sum of sample-based contribution, and the weighted sum of resolution-based contribution; and
providing the selection score to a pre-classified ML model to select an optimal ML model for assessment of the expected hazard in the susceptible region based on the selection score.

10. The one or more non-transitory machine-readable information storage mediums as claimed in claim 9, wherein the one or more quantitative influencing factor affecting the hazard comprises a slope, an elevation, an aspect, and a Topographic Wetness Index (TWI) of the susceptible region, a distance of the susceptible region to water bodies, a distance of the susceptible region to nearby roads, a rainfall intensity in the susceptible region, a groundwater level in the susceptible region, a rainfall duration in the susceptible region, and a distance to faulty section within the susceptible region.

11. The one or more non-transitory machine-readable information storage mediums as claimed in claim 9, wherein the one or more qualitative influencing factor manipulating the hazard comprises a lithology information, a rock hardness, a geological information of one or more structures such as one or more folds, one or more joints, a soil type, a soil texture, a type of land-cover, a type of land-use and a type of vegetation.

12. The one or more non-transitory machine-readable information storage mediums as claimed in claim 9, wherein the pre-classified machine learning model comprises a plurality of sets, each of the plurality of sets comprising a plurality of machine leaning models, and wherein
a first set of the plurality of sets includes a random chance model, a naive bayes classifier model, a logistic regression classifier model, and a support vector classifier model;
a second set of the plurality of sets includes a support vector classifier with kernel model, a random forest classifier model, and a shallow neural networks model; and
a third set of the plurality of sets includes a deep fully connected neural network, a convolutional neural network, and a deep convolutional neural network.
